# FASCICULE DE BREVET EUROPEEN

(11) **EP 0 606 791 B1**
(45) Date de publication et mention de la délivrance du brevet: **07.06.2000**
(21) Numéro de dépôt: 93402979.4
(22) Date de dépôt: 09.12.1993
(51) Int. Cl.: G06F 9/46

(54) **Dispositif et procédé d'utilisation de fonctions de pseudo point de communication déportées (pseudo sockets)**
Gerät und Verfahren zur Verwendung von Pseudo-Sockets
Apparatus and method to use pseudo sockets

(30) Priorité: 11.12.1992 FR 9214971
(43) Date de publication de la demande: 20.07.1994
(73) Titulaire: BULL S.A., 78430 Louveciennes (FR)
(72) Inventeur: Aydin, Alev, F-78990 Elancourt (FR); Jacobs, Margaret, F-78230 Le Pecq (FR); Besnier, Annick, F-78830 Bullion (FR)
(74) Mandataire: Colombe, Michel

(56) Documents cités:
- EP-A- 0 371 229
- GB-A- 2 176 636
- US-A- 5 123 094
- UNIX REVIEW Juin 1987 , US pages 66 - 75 HERRICK J. JOHNSON: 'Each piece in its place'
- PROCEEDINGS OF THE 1989 INTERNATIONAL CONFERENCE ON PARALLEL PROCESSING vol. II , 8 Aoüt 1989 , ST. CHARLES, IL, US, pages II-160 - II-169 XP78485 UMAKISHORE RAMACHANDRAN ET AL.: 'Coherence of Distributed Shared Memory: Unifying Synchronization and Data Transfer'
- MAURICE J. BACH: 'The design of the UNIX operating system' , PRENTICE/HALL INTERNATIONAL, INC. , ENGLEWOOD CLIFFS, NJ 07632, US Chapitre 11: 'Interprocess communication', pages 355 - 390 * page 367, ligne 16 - page 389, ligne 6 *

## Description

La présente invention concerne un dispositif d'utilisation de procédure d'appel à distance de fonctions de pseudo point de communication déportées (pseudo-sockets) et le procédé mis en oeuvre par le dispositif. Il est connu des systèmes informatiques comportant un système d'exploitation propriétaire. Il est également connu dans l'art antérieur des systèmes dits ouverts, par exemple de type "UNIX" qui compte tenu de leurs programmes et de leur constitution comportent des procédures d'appel à distance pour appeler d'autres systèmes ouverts implantés sur des stations éloignées. EP-A-0,371,229 décrit l'utilisation de la procédure d'appel à distance dans un réseau local d'ordinateurs avec un ordinateur central et plusieurs ordinateurs personels. Il est également connu sur des systèmes informatiques pourvus de système d'exploitation propriétaire, c'est à dire spécifique au constructeur, d'implanter également sur ces systèmes un sous-système ouvert, par exemple du type "UNIX" qui offre les fonctions "prises de communication" (socket) permettant ainsi d'établir une communication à distance avec une autre station. Toutefois ces systèmes ne permettent pas aux applications tournant sur un système d'exploitation spécifique à un constructeur par exemple GCOS de communiquer avec des systèmes ouverts, par exemple du type "UNIX" et en particulier avec des stations éloignées.

Un premier but de l'invention est de proposer un dispositif permettant d'effectuer une liaison entre les applications tournant sur le système d'exploitation spécifique au constructeur pour communiquer, à travers le sous-système ouvert implanté sur la même machine, avec des stations éloignées.

Ce but est atteint par le fait que le dispositif, permettant d'utiliser une procédure d'appel à distance de systèmes ouverts utilisant le procédé point de communication (socket) dans une application propriétaire utilisant des primitives inexistantes dans le système d'exploitation propriétaire et fonctionnant sur un système informatique disposant d'un sous-système ouvert, ce sous-système ouvert disposant de la fonction point de communication (socket), est caractérisé en ce qu'il comporte :
des moyens de communiquer entre l'application propriétaire et le sous-système ouvert via des segments de mémoire partagée ;
des moyens de coder dans un format spécial les primitives de l'application propriétaire qui n'existent pas dans le système d'exploitation propriétaire et de stocker ces primitives dans un segment de la mémoire partagée;
des moyens de lancer une application sur le système ouvert pour décoder, et faire exécuter la fonction demandée par la primitive et de renvoyer dans le même segment de mémoire le résultat de la fonction exprimée dans le format spécial;
des moyens de décoder le résultat de la fonction exprimée dans le format spécial de façon à ce que l'application propriétaire ait la visibilité "normale" de la fonction, c'est-à-dire comme si la fonction est exécutée localement par le système d'exploitation propriétaire ;
des moyens d'assurer la synchronisation des accès à la mémoire partagée.

Selon une autre particularité, les moyens d'assurer la synchronisation sont un premier, deuxième, et troisième sémaphores.

Selon une autre particularité, lorsque l'application propriétaire exécute une opération P sur le premier sémaphore, l'application du sous-système ouvert exécute une opération P sur le deuxième sémaphore, puis l'application propriétaire exécute une opération V sur le deuxième sémaphore et une opération P sur le troisième sémaphore, ensuite l'application du sous-système ouvert exécute une opération V sur le troisième sémaphore et enfin l'application propriétaire exécute une opération V sur le premier sémaphore.

Selon une autre particularité, le format spécial dans lequel sont codées les primitives inexistantes dans le système d'exploitation propriétaire comprend une zone message constituée d'un premier champ formé par un entier représentant la fonction ;
un deuxième champ représentant le numéro de process pour lequel la demande est faite ;
un troisième champ indiquant la valeur de la fonction après l'exécution de la fonction ;
un quatrième champ indiquant par la valeur O que la fonction s'est exécutée normalement ;
un cinquième et un sixième champ pour identifier la machine qui fait la demande ;
un septième champ réservé ; des huitième, neuvième, dixième, onzième, douzième, treizième champs destinés chacun à stocker des valeurs de paramètre représentées par un entier et;
un quatorzième champ tampon destiné à stocker des caractères représentant les valeurs de paramètre autre que des entiers.

Selon une autre particularité, les moyens de codage des primitives de l'application propriétaire vers le format spécial comportent une table de correspondance des primitives vers des valeurs entières qui représentent la fonction spécifique et un programme spécifique pour chaque fonction permettant de remplir les champs utiles du format.

Selon une autre particularité, les moyens de décodage du format spécial vers les primitives du sous-système ouvert comportent une table de correspondance des valeurs entières vers les primitives du sous-système ouvert et un programme de traitement spécifique des champs du format utile à chaque primitive du sous-système ouvert.

Un autre but de l'invention est de proposer un procédé mis en oeuvre par le dispositif.

Ce but est atteint par le fait que le procédé d'appel à distance de stations éloignées à partir d'une station utilisant un système d'exploitation propriétaire et ayant un sous-système ouvert consiste dans les étapes suivantes :
- mise à l'état P d'un premier sémaphore par le système propriétaire et d'un deuxième sémaphore par le sous-système ouvert ;
- codage de la fonction à exécuter dans un format donné par une routine de service du système propriétaire ;
- écriture de cette fonction codée dans un segment de mémoire partagée ;
- mise à l'état V d'un deuxième sémaphore ;
- réveil par la mise à l'état V du deuxième sémaphore d'une application serveur de point de communication (socket serveur), fonctionnant dans le sous-système ouvert ;
- décodage par cette application du message contenu dans le segment et concomitamment mise à l'état P d'un troisième sémaphore par le système d'exploitation propriétaire;
- exécution de la fonction décodée par la station éloignée;
- réception du résultat par le sous-système ouvert et recodage de ce résultat dans le format spécifique ;
- réécriture du résultat encodé dans le segment de mémoire partagée ;
- mise à l'état V du troisième sémaphore provoquant ainsi le réveil de l'application routine de service et mise à l'état P du deuxième sémaphore provoquant ainsi la mise en attente du socket serveur;
- interprétation par cette routine de service du résultat de la fonction ;
- mise à l'état V du premier sémaphore pour permettre à d'autres utilisateurs du système d'exploitation propriétaire d'effectuer un autre appel à distance de cette manière, sans qu'il y ait mélange d'informations par les deux utilisateurs.

D'autres particularités et avantages de la présente invention apparaitront plus clairement à la lecture de la description ci-après, faite en référence aux figures dans lesquelles :
La figure 1 représente une vue schématique du dispositif selon l'invention,
La figure 2 représente un organigramme du procédé mis en oeuvre par le dispositif,
La figure 3 représente le format de codage d'une fonction stockée dans une zone message de la mémoire partagée,
La figure 4 représente le tableau de correspondance utilisé par la routine de service ou par le serveur de point de communication.

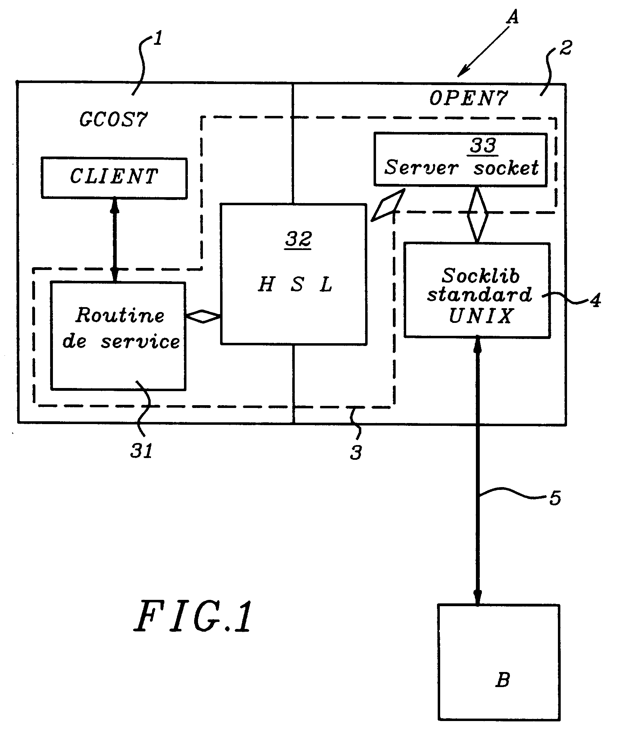

La figure 1 représente un système informatique (A) comportant un système d'exploitation propriétaire, par exemple du type GCOS7, ce système informatique (A) pouvant également fonctionner avec un sous-système ouvert par exemple OPEN7 du type "UNIX". Ce sous-système ouvert "UNIX" (2) comporte une bibliothèque ("UNIX") standard (4) permettant d'utiliser les fonctions point de communication (socket) d'environnement "UNIX". Toutefois dans le système informatique de l'art antérieur, il n'existe aucune communication possible entre le système d'exploitation propriétaire et le sous-système ouvert permettant ainsi la mise en oeuvre de fonction de communication à distance du type point de communication (socket). Ces fonctions point de communication à distance permettent aux systèmes fonctionnant à l'aide du sous-système OPEN7 de communiquer via la ligne de communication (5) avec une autre machine (B) du type fonctionnant avec un système ouvert par exemple du type "UNIX".

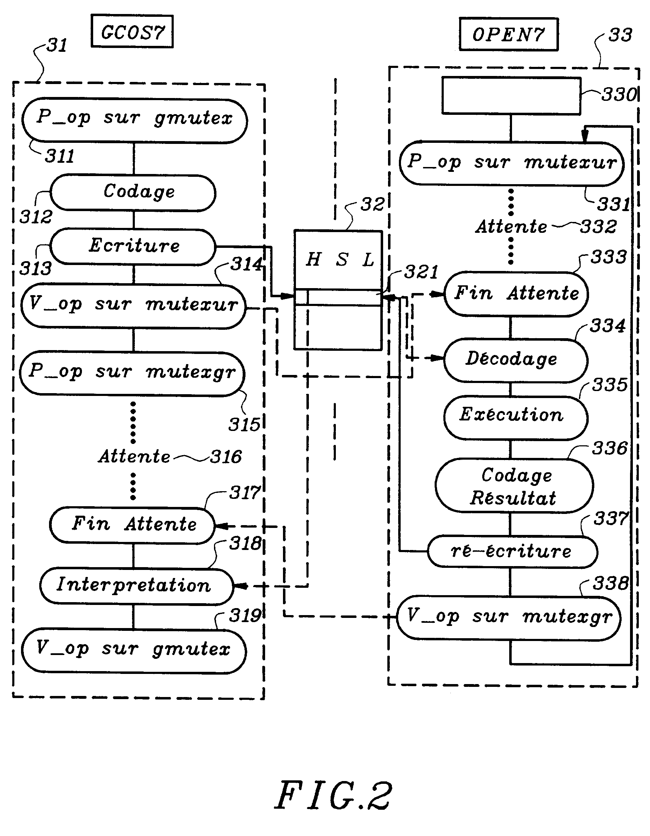

L'invention concerne principalement le dispositif permettant au système d'exploitation propriétaire (1) de communiquer avec le sous-système (2) et par l'intermédiaire de ces fonctions point de communication du sous-système ouvert "UNIX" avec une station (B) éloignée de type "UNIX". Le dispositif comporte une routine de service de procédure d'appel éloignée (31) (run time remote procedure call). Cette routine (31) communique avec un segment de mémoire partagée (32) de la machine et à travers ce segment de mémoire partagée (32) avec un serveur de point de communication (33) (socket serveur) qui communique avec la bibliothèque standard (4) des fonctions de communication de type du sous-système ouvert ("UNIX") permettant la communication avec une station éloignée. Le procédé mis en oeuvre par le dispositif et les moyens utilisés dans le dispositif va maintenant être décrit à l'aide des figures 2,3,4.

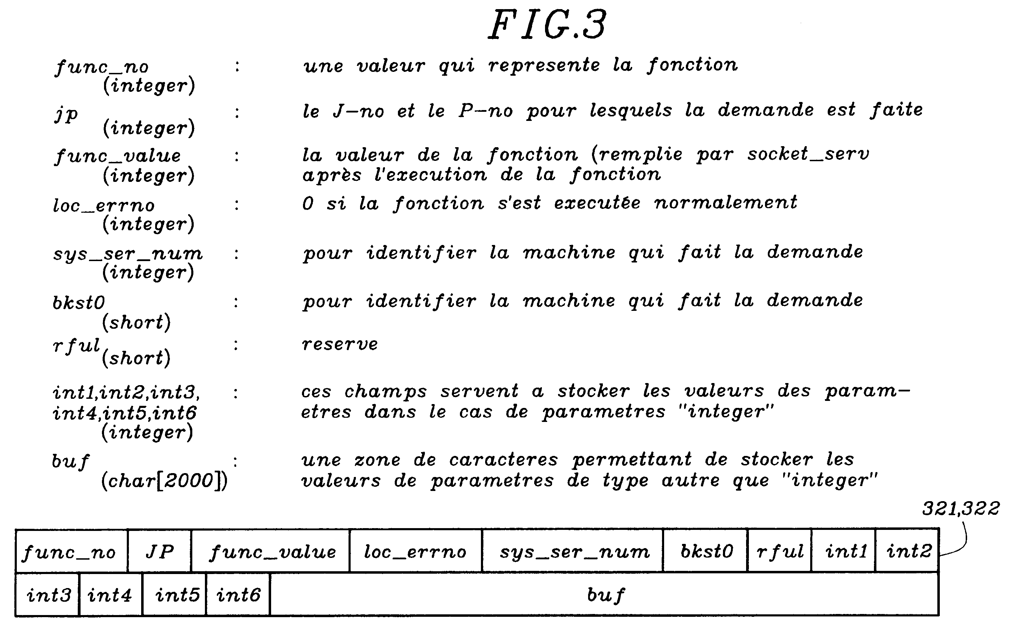

La routine de service de RPC (Remote Procedure Call) contient un point d'entrée correspondant à chaque fonction "UNIX" qui n'existe pas dans le système d'exploitation propriétaire. Les paramètres et les noms de tous ces points d'entrée sont identiques à ceux qui correspondent aux fonctions manquantes. Donc, automatiquement, lorsqu'une application propriétaire appelle une fonction manquante, c'est le point d'entrée correspondant de la routine de service qui est activé. Cette routine de service fonctionne comme explicité à la figure 2, en commençant par faire une opération P sur un sémaphore (gmutex) comme représenté à l'étape (311) puis ensuite à exécuter un codage représenté à l'étape (312), ce codage consistant à traduire dans un format représenté à la figure 3 la fonction non existante pour le système d'exploitation propriétaire en un format déterminé. Ensuite l'étape (313) consiste à écrire cette fonction codée dans le format déterminé dans un segment de mémoire (321) d'une mémoire partagée (32). La routine de service (31) effectue ensuite comme représenté à l'étape (314) une opération V sur un sémaphore (mutexur) et à l'étape (315) une opération P sur un sémaphore (mutexgr) puis se met en attente comme représenté à l'étape (316). L'exécution de l'opération V sur le sémaphore (mutexur) déclenche le réveil du serveur de point de communication (33) qui avait été mis en attente lors de l'étape (331) par une opération P sur le sémaphore (mutexur) dans l'état d'attente représenté à l'étape (332). L'opération V sur le sémaphore (mutexur) exécutée par la routine de service RPC déclenche donc le réveil du serveur de point de communication et provoque l'étape (333) de fin d'attente qui ensuite lance la procédure de décodage (334) du message lu dans la zone (321) de la mémoire partagée. Cette étape de décodage est ensuite suivie d'une étape d'exécution (335) de la fonction. Cette étape d'exécution s'effectuera sur une station éloignée par exemple du type "UNIX" B après avoir mis en oeuvre le mécanisme de point de communication standard existant dans le sous-système ouvert par exemple "UNIX" par utilisation de la bibliothèque de fonctions de communication standard (4). Cette étape d'exécution est suivie d'une étape de codage (336) du résultat de la fonction, ce résultat étant reçu par la partie sous-système ouvert par exemple "UNIX" de la station A et provenant de la station B. Ce codage s'effectue selon le format représenté à la figure 3 et à l'étape (337) le serveur (33) écrit le résultat dans le segment (321) de la mémoire partagée. Après cette étape, le serveur exécute une opération V sur le sémaphore (mutexgr), cette opération V ayant pour but de réveiller la routine de service RPC en provoquant l'étape de fin d'attente (317) qui lance ensuite l'étape (318) d'interprétation du résultat de la fonction par le système d'exploitation propriétaire et ensuite une étape d'opération V sur le sémaphore (gmutex). Cette opération V ayant pour but de permettre à d'autres utilisateurs d'effectuer un travail similaire. L'opération P à l'étape (311) a pour but d'éviter que d'autres utilisateurs du système d'exploitation écrivent dans le segment partagé en même temps, et l'opération P à l'étape (331) a pour but de mettre le serveur (33) de point de communication en attente de la fin d'écriture dans le segment de mémoire partagée. Avant toute utilisation de la routine de service RPC (31) sur le système d'exploitation propriétaire, il faut au préalable lancer dans le sous-système ouvert par exemple "UNIX" le serveur de point de communication (33) pour qu'il exécute l'étape (330) qui consiste à créer un segment de mémoire partagée (32) et à demander l'allocation de trois sémaphores (mutexur, gmutex et mutexgr) et ensuite à se mettre en attente sur le sémaphore (mutexur). La fonction codée par la routine de service comprendra les informations représentées à la figure 3 et ces informations seront stockées dans une zone de message au format représenté à la figure 3. Cette zone de message comprend un premier champ dont la valeur représente la fonction (func_no), un deuxième champ qui représente le numéro J et le numéro P pour lesquels la demande est faite (JP), un troisième champ (func-value) indiquant la valeur de la fonction après l'exécution de la fonction. Cette valeur étant remplie par le serveur de point de communication (33) à l'étape (337). Un quatrième champ (loc-errno) qui indique par la valeur O que la fonction s'est exécutée normalement ;
un cinquième champ (sys_ser_num) et un sixième champ (bksto) qui identifient la machine qui fait la demande ;
un septième champ réservé (RFU1) ;
des huitième (INT1), neuvième (INT2), dixième (INT3), onzième (INT4), douzième (INT5), treizième (INT6) champs destinés chacun à stocker une valeur de paramètre représentée par un entier ;
et enfin un quatorzième champ (BUF) destiné à constituer un tampon pour stocker des caractères représentant les valeurs des paramètres autres que des entiers.

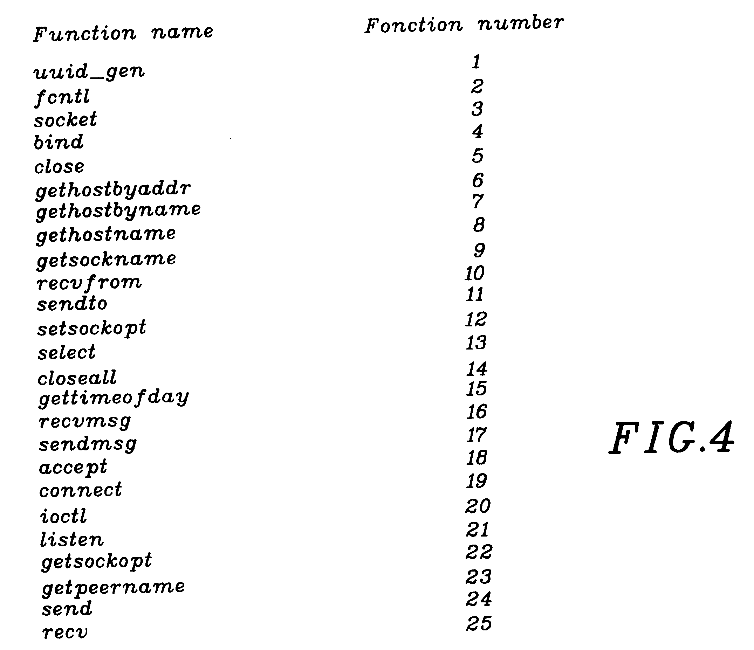

La valeur représentative d'une fonction inscrite dans le premier champ est traduite au codage par la routine de service (31) ou au décodage par le serveur de point de communication (33) selon le tableau figurant à la figure 4. Ce tableau représente les fonctions principales mises en oeuvre dans le dispositif de l'invention.

Nous rappellerons qu'une opération P fait une opération de décrémentation (-1) sur la valeur du sémaphore, et si la valeur ainsi obtenue est négative, le process est bloqué et attend le déblocage par une opération V qui par une incrémentation (+1) rend positive la valeur du sémaphore. Les trois sémaphores sont créés en utilisant une fonction (ssemall), ce qui permet d'associer une adresse donnée à un sémaphore de type O, cette adresse étant communiquée au serveur (33). Le serveur écrit ensuite dans la zone d'entête de la mémoire partagée (header) les adresses des trois sémaphores et le système d'exploitation s'attache ensuite le segment de mémoire par une fonction (shmemat) ce qui lui permet ensuite de récupérer les adresses des trois sémaphores pour faire une opération V ou une opération P selon le choix du programme. Une telle opération s'effectue par la fonction (ssemop) qui selon le paramètre qu'on lui affecte permet la sélection entre l'opération V ou l'opération P.

Pour bien permettre la compréhension de l'invention, nous allons maintenant effectuer la description du codage et décodage par la routine de service (31) et le serveur (33), pour quelques exemples de fonctions qui figurent dans la table de la figure 4.

### Exemple 1 :

Chaque fois qu'un client GCOS7 demande une fonction inexistante, par exemple la fonction "socket", la routine de service (31) effectue le codage de cette fonction en remplissant la zone message comme explicité ci-dessous :
- func_no: = 3
- int1: = dom
- int2: = type
- int3: = prot.
les champs jp, sys_ser-num et bkst0 sont également remplis.

Le message après écriture dans le segment de mémoire partagée est ensuite décodé par le serveur (33) qui sait par programme que pour la fonction "socket" (func_no = 3) seuls les champs ci-dessus sont valables en entrée.

Le serveur exécute ensuite la fonction soit en local, soit en interaction avec une station éloignée et code le résultat de la façon suivante :
func_value = socket (int1, int2, int3)
si func_value = -1, alors le champ loc_errno = -1.

La réécriture s'effectue uniquement dans ces champs du segment et pour son étape d'interprétation la routine de service (31) sait que seuls les champs func_value et loc_errno sont valables au retour de la fonction "socket".

### Exemple 2 :

La fonction "gethostbyname" permet à un utilisateur "UNIX", ne sachant que le nom du site "host", d'obtenir d'autres renseignements utiles concernant le site "host". Tous ces renseignements sont regroupés dans des structures (comme indiqué par notre schéma). Les flèches ne représentent pas des correspondances mais sont des pointeurs d'une structure vers une autre structure ou vers une chaîne de caractères (par exemple, "h_name"). De cette façon, il suffit de connaître l'adresse de la première structure pour accéder à l'ensemble des informations utiles concernant le site "host". C'est pour cette raison que la valeur de la fonction est l'adresse de la première structure.

Lorsque la fonction demandée par GCOS7 est la fonction "*gethostbyname (name)", le programme de codage (31)sait que cette fonction a un seul paramètre d'entrée, constitué par une chaîne de caractères qui représente le nom de la machine (host). La valeur de la fonction est l'adresse d'une structure complexe, certains champs de la structure servant de pointeurs vers d'autres structures ou chaînes de caractères.

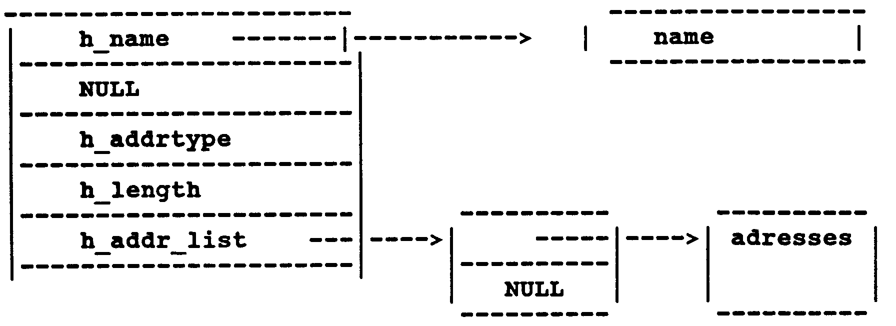

Pour passer cette demande de fonction au sous-système OPEN7 d"'UNIX", la zone message du segment de mémoire est remplie comme ci-dessous :
- func_no: = 7
- buf: = name.

Puis, le codage effectue un transcodage EBCDIC en code ASCII sur le contenu (du buffer) du tampon, car du côté "UNIX", seuls les caractères ASCII sont attendus.
Les champs jp, sys_ser_num et bkst0 sont également remplis.

Le message est ensuite écrit dans le segment de mémoire et est ensuite décodé par le serveur (33), qui sait que pour la fonction "gethostbyname", seul le champ tampon est valable en entrée.

L'exécution s'effectue de la façon suivante :
structure_adresse = gethostbyname (buffer)
si structure_adresse = NULL, alors loc_errno = -1.

Comme cela n'a pas de sens de renvoyer au système d'exploitation propriétaire l'adresse d'une structure qui se trouve sur le sous-système "UNIX", nous effectuons un décodage du résultat de la fonction pour transmettre au système d'exploitation propriétaire toutes les informations pointées par l'adresse rendue. Ceci est fait de la façon suivante :
le champ tampon (buf) est rempli avec le nom (name) et ensuite les adresses pointées indirectement par h_addr_list, informations qui sont concaténées au nom (name), qui a une longueur fixe de 14 caractères.

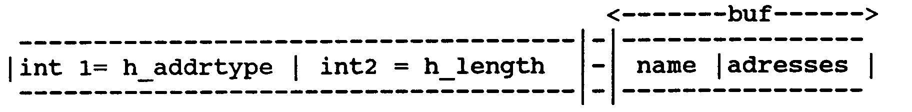

Le message de retour est renvoyé au système d'exploitation propriétaire via le segment de mémoire partagée. Au cours de l'interprétation par GCOS7, on sait que les champs (int1), (int2) et (buf) doivent être utilisés pour allouer et remplir les structures retournées par la fonction "gethostbyname".

### Exemple 3 :

Dans le cas où la fonction inexistante est la fonction "sendto", la routine de service (31) sait que cette fonction a quatre paramètres de type entier (s, len, flags et fromlg). i = sendto (s, buffer, len, flags, from, fromlg). Le paramètre "buffer" est une chaîne de caractères et "from" est un pointeur vers une structure sockaddr du format suivant : 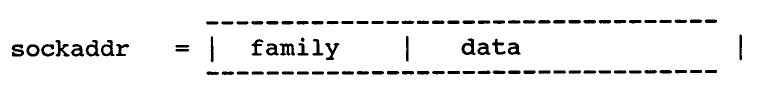 ou "family" est un demi-mot de format entier, "data" est une chaîne de caractères de longueur 14.

Tous les paramètres sont des paramètres d'entrée.

On utilise le terme "paramètre d'entrée" pour distinguer un paramètre qui sert à fournir des informations à une fonction (permettant ainsi à la fonction de s'exécuter correctement) d'un paramètre de sortie qui contient des informations rendues par la fonction exécutée. Certains paramètres peuvent être comme dans la fonction "select", des paramètres d'entrée et de sortie.

Pour passer cette demande de fonction au serveur (33), la zone de message est remplie comme explicité ci-dessous :
- func_no: = 11 (la fonction sendto)
- int1: = s
- int2: = len
- int3: = flags
- int4: = fromlg

Le champ tampon (buf) est rempli avec buffer et ensuite la structure pointée par from est concaténée à buffer.

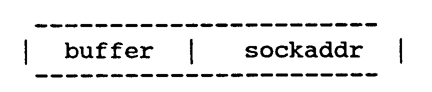

Les champs jp, sys_ser_num et bkst0 sont également remplis.

Le message est écrit dans le segment de mémoire partagée et il est ensuite décodé par le serveur (33) qui sait que pour la fonction sendto, seuls les champs ci-dessus sont valables en entrée.

Le serveur (33) exécute la fonction de la façon suivante :
le champ tampon (buf) est d'abord décodé pour récupérer les valeurs de buffer et de from_structure.

func_value = sendto (int1, buffer, int2, int3, &sockaddr, int4), &sockaddr représentant l'adresse de sockaddr, le résultat de l'exécution se présentant sous la forme :
si func_value = -1, alors loc_errno = -1.

Le message de retour est envoyé au système d'exploitation propriétaire via le segment de mémoire partagée. Au retour dans le système d'exploitation, on sait que seuls les champs func_value et loc_errno sont valables pour la fonction "sendto".

### Exemple 4 :

Lorsque la fonction appelée par le client GCOS7 est "recvfrom", la routine de service sait que cette fonction a trois paramètres de type entier (s, len et flags). i= recvfrom (s, buffer, len, flags, from, fromlg). Le paramètre "buffer" est une chaîne de caractères et "from" est un pointeur vers une structure du format suivant : 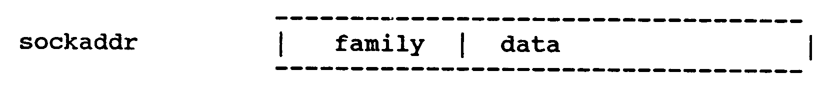 ou "family" est un demi-mot de format entier, "data" est une chaîne de caractères de longueur 14.
le paramètre "fromlg" pointe vers une donnée en format entier.

Les paramètres s, len et flags sont des paramètres d'entrée. "fromlg" est un paramètre d'entrée et de sortie, alors que "buf" et "from" sont des paramètres de sortie uniquement.

Pour passer cette demande de fonction au serveur (33), la zone de message est remplie comme explicité ci-dessous :
- func_no: = 10 (la fonction recvfrom)
- int1: = s
- int2: = len
- int3: = flags

int4 = *fromlg (int4 = la valeur de l'entier pointée par fromlg)

Le champ tampon (buf) sera utilisé pour contenir, au retour de OPEN7, les informations suivantes :

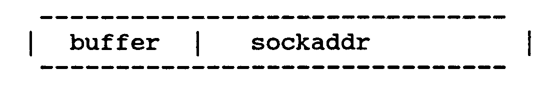

Les champs jp, sys_ser_num et bkst0 sont également remplis.

Le message est écrit dans le segment de mémoire partagée et il est ensuite décodé par le serveur (33) qui sait que pour la fonction "recvfrom", seuls les champs ci-dessus sont valables en entrée.

Le serveur (33) effectue la fonction de la façon suivante :
func_value = recvfrom (int1, buffer, int2, int3,
&from_copy, &int4), &from_copy représentant l'adresse de
from_copy, &int4 représentant l'adresse de int4.

Le résultat de l'exécution se présentent sous la forme : si func_value = -1, alors loc_errno = -1.

Le contenu du tampon (buf) est rempli directement par l'appel de la fonction "recvfrom". Le contenu de from (pointé côté OPEN7 par l'adresse de from_copy) est ensuite concaténé comme décrit ci-dessus.

Le message de retour est renvoyé au système d'exploitation propriétaire via le segment de mémoire partagée. Au retour dans le système d'exploitation, on sait que seuls les champs (func_value), (loc_errno), (int4) et (buf) sont valables pour la fonction "recvfrom".

### Exemple 5 :

Enfin lorsque la fonction appelée par le client est la fonction "select", l'opération de codage effectuée par la routine de service (31) sait que cette fonction a cinq paramètres. 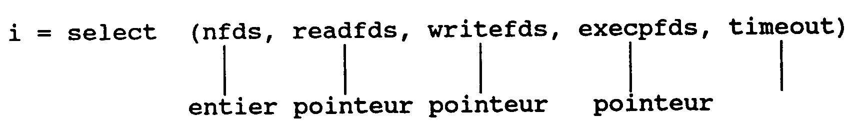
le paramètre "nfds" est un paramètre d'entrée et les autres sont des paramètres d'entrée et de sortie, ces quatre derniers sont des pointeurs vers des structures de taille fixe.

Pour passer cette demande de fonction au serveur (33), la zone de message est remplie comme explicité ci-dessous :
func_no = 13 (la fonction select)
int1 = nfds.

Le champ tampon (buf) est ensuite rempli de la façon suivante :

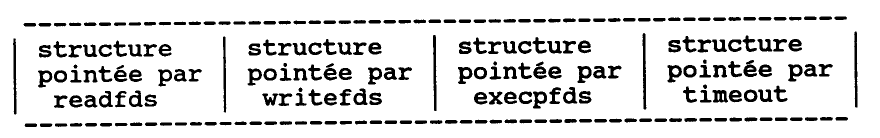

Les paramètres readfds, writefds, execpfds et timeout pouvant être nuls, les champs correspondant dans le tampon (buf) seront omis dans ce cas. Ceci est signalé à OPEN7 par le positionnement à 1 ou à O des champs int2, int3, int4, int5 selon la présence ou non du paramètre dans buf.
int2 = 0 ---> readfds est NULL
int2 = 1 ---> readfds est non-NULL
int3 = 0 ---> writefds est NULL
int3 = 1 ---> writefds est non-NULL
int4 = 0 ---> execpfds est NULL
int4 = 1 ---> execpfds est non-NULL
int5 = 0 ---> timeout est NULL
int5 = 1 ---> timeout est non-NULL

Les champs jp, sys_ser_num et bkst0 sont également remplis.

Le message est écrit dans le segment de mémoire partagée et il est ensuite décodé par le serveur (33) qui sait que pour la fonction "select", seuls les champs ci-dessus sont valables en entrée.

Le serveur (33) effectue la fonction de la façon suivante :
func_value = select (int1, readptr, writeptr, execpptr, timeoutptr),
readptr, writeptr, execpptr et timeoutptr sont des pointeurs vers des structures OPEN7 du même format que celles pointées par readfds, writefds, execpfds et timeout.

Le résultat de l'exécution se présentant sous la forme :
si func_value = -1, alors loc_errno = -1.

Le contenu des structures pointées par readptr, writeptr, execpptr et timeoutptr est ensuite inséré dans le tampon (buf) selon les valeurs de (int2), (int3), (int4) et (int5).

Le message de retour est renvoyé au système d'exploitation propriétaire via le segment de mémoire partagée. Au retour dans le système d'exploitation, on sait quels sont les champs valables pour la fonction "select".

Les exemples de fonctions données ci-dessus sont purement explicatifs et non limitatifs et toutes modifications à la portée de l'homme de métier fait également partie de l'esprit de l'invention.

## Revendications

1. Dispositif permettant d'utiliser une procédure d'appel à distance (REMOTE PROCEDURE CALL) de systèmes ouverts utilisant le procédé point de communication (socket) dans une application propriétaire (proprietary) utilisant des primitives inexistantes dans le système d'exploitation propriétaire (1) et fonctionnant sur un système informatique disposant d'un sous-système ouvert ("UNIX")(2), ce sous-système ouvert (2) disposant de la fonction point de communication (socket) caractérisé en ce qu'il comporte:
des moyens de communiquer entre l'application propriétaire (CLIENT) et une application (33) sous le sous-système ouvert via des segments de mémoire partagée (32);
des moyens de coder dans un format spécial les primitives de l'application propriétaire qui n'existent pas dans le système d'exploitation propriétaire (1) et de stocker ces primitives dans un segment de la mémoire partagée (32);
des moyens de lancer une application (33) sous le système ouvert ("UNIX")(2) pour décoder, faire exécuter la fonction demandée par la primitive et de renvoyer dans le même segment de mémoire (32) le résultat de la fonction exprimée dans le format spécial;
des moyens de décoder le résultat de la fonction exprimée dans le format spécial pour donner à l'application propriétaire (CLIENT) une même visibilité comme si la fonction était effectuée localement par le système d'exploitation propriétaire (1);
des moyens (gmutex, mutexur et mutexgr) d'assurer la synchronisation des accès à la mémoire partagée (32).

2. Dispositif selon la revendication 1 caractérisé en ce que les moyens d'assurer la synchronisation sont un premier (gmutex), deuxième (mutexur) et troisième (mutexgr) sémaphores.

3. Dispositif selon la revendication 2 caractérisé en ce que lorsque l'application propriétaire (CLIENT) exécute une opération P sur le premier sémaphore (gmutex), l'application (33) du sous-système ouvert (2) exécute une opération P sur le deuxième sémaphore (mutexur), puis l'application propriétaire exécute une opération V sur le deuxième sémaphore (mutexur) et une opération P sur le troisième sémaphore (mutexgr), ensuite l'application exécute une opération V sur le troisième sémaphore (mutexgr) et enfin l'application propriétaire exécute une opération V sur le premier sémaphore (gmutex).

4. Dispositif selon une des revendications précédentes caractérisé en ce que le format spécial dans lequel sont codées les primitives (RPC) inexistantes dans le système d'exploitation propriétaire (1) comprend une zone message constituée:
d'un premier champ (func-n°) formé par un entier représentant la fonction;
d'un deuxième champ (JP) représentant le J n° et le P n° pour lequel la demande est faite;
d'un troisième champ (func-value) indiquant la valeur de la fonction après l'exécution de la fonction;
d'un quatrième champ (loc-errn°) indiquant par la valeur zéro que la fonction s'est exécutée normalement;
d'un cinquième (sys-ser-num) et sixième (bksto) champ pour identifier la machine qui fait la demande;
d'un septième champ réservé;
de huitième (int1) , neuvième (int2) , dixième (int3) onzième (int4), douzième (int5), treizième (int6) champs destinés chacun à stocker une valeur de paramètre représentée par un entier;
d'un quatorzième champ tampon (buf) destiné à stocker des caractères représentant les valeurs des paramètres autres que des entiers.

5. Dispositif selon la revendication 4 caractérisé en ce que les moyens de codage des primitives de l'application propriétaire (CLIENT) vers le format spécial comportent une table de correspondance des primitives vers des valeurs entières qui représentent la fonction spécifique et vers un programme spécifique pour chaque fonction permettant de remplir de façon adéquate les champs utiles du format.

6. Dispositif selon la revendication 4 caractérisé en ce que les moyens de décodage du format spécial vers des primitives du sous-système ouvert (2) comportent une table de correspondance des valeurs entières vers des primitives du sous-système ouvert et vers un programme de traitement spécifique des champs du format utiles à chaque primitive du sous-système ouvert.

7. Procédé mis en oeuvre par le dispositif selon l'une des revendications précédentes, caractérisé en ce que le procédé d'appel à distance de stations éloignées (B) à partir d'une station (A) utilisant un système d'exploitation propriétaire (1) et ayant un sous-système ouvert (2) consiste dans les étapes suivantes :
- exécution d'une opération P sur un premier sémaphore(gmutex) par le système propriétaire (1) et sur un deuxième sémaphore (mutexur) par le sous-système ouvert (2);
- codage de la fonction à exécuter dans un format donné par une routine de service (31) du système propriétaire (1);
- écriture de cette fonction codée dans un segment de mémoire partagée (32);
- exécution d'une opération V sur un deuxième sémaphore(mutexur)
- réveil par l'exécution d'une opération V sur le deuxième sémaphore (mutexur) d'une application serveur de point de communication (socket serveur)(33), fonctionnant dans le sous-système ouvert (2);
- décodage par cette application (33) du message contenu dans le segment (32) et concomitamment exécution d'une opération P sur un troisième sémaphore (mutexgr) par le système d'exploitation propriétaire (1);
- exécution de la fonction décodée par la station éloignée (B);
- réception du résultat par le sous-système ouvert (2) et recodage de ce résultat dans le format spécifique ;
- réécriture du résultat encodé dans le segment de mémoire partagée (32);
- exécution d'une opération V sur le troisième sémaphore (mutexgr) provoquant ainsi le réveil de l'application routine de service (31) et exécution d'une opération P sur le deuxième sémaphore(mutexur) provoquant ainsi la mise en attente du socket serveur (33);
- interprétation par cette routine de service (31) du résultat de la fonction ;
- exécution d'une opération V sur le premier sémaphore (gmutex) pour permettre à d'autres utilisateurs du système d'exploitation propriétaire (1) d'effectuer un autre travail.

8. Procédé selon la revendication 7 caractérisé en ce que avant toute utilisation de la routine de service (31) pour l'exécution d'une fonction inexistante sur le système d'exploitation propriétaire (1), il existe une étape de lancement du serveur de point de communication (33) qui dans une première étape crée un segment de mémoire partagée (32) et demande l'allocation des trois sémaphores (gmutex, mutexur et mutexgr), avant d'exécuter l'opération P sur le deuxième sémaphore (mutexur) provoquant sa mise en attente.

## Claims

1. Device permitting use of a remote call procedure on open systems using the communication point (socket) method in a proprietary application using primitives that do not exist in the proprietary operating system (1) and running on a computer system having an open sub-system ("UNIX") (2), this open sub-system (2) having the communication point (socket) function characterised in that it comprises:
means for communicating between the proprietary application (CLIENT) and an application (33) under the open sub-system via shared memory segments (32);
means for encoding in a special format the primitives of the proprietary application that do not exist in the proprietary operating system (1) and for storing these primitives in a segment of the shared memory (32);
means for launching an application (33) under the open system ("UNIX") (2) in order to decode, to have the function requested by the primitive executed and for sending back to the same memory segment (32) the result of the function expressed in the special format;
means for decoding the result of the function expressed in the special format in order to give the proprietary application (CLIENT) the same visibility as if the function were performed locally by the proprietary operating system (1);
means (gmutex, mutexur and mutexgr) for ensuring the synchronisation of access to the shared memory (32).

2. Device according to Claim 1 characterised in that the means for ensuring synchronisation are a first (gmutex), second (mutexur) and third (mutexgr) flags.

3. Device according to Claim 2 characterised in that when the proprietary application (CLIENT) executes an operation P on the first flag (gmutex), the application (33) of the open sub-system (2) executes an operation P on the second flag (mutexur), then the proprietary application executes an operation V on the second flag (mutexur) and an operation P on the third flag (mutexgr), then the application executes an operation V on the third flag (mutexgr) and finally the proprietary application executes an operation V on the first flag (gmutex).

4. Device according to one of the preceding claims characterised in that the special format in which are encoded the primitives (RPC) that do not exist in the proprietary operating system (1) comprises a message zone constituted:
by a first field (func-n°) formed by an integer representing the function;
by a second field (JP) representing the J no. and the P no. in which the request is made;
by a third field (func-value) indicating the value of the function after the execution of the function;
by a fourth field (loc-errn°) indicating by the value zero that the function was executed normally;
by a fifth (sys-ser-num) and sixth (bksto) field in order to identify the machine that is making the request;
by a seventh, reserved, field;
by eighth (int1), ninth (int2), tenth (int3), eleventh (int4), twelfth (int5), thirteenth (int6) fields each intended to store a parameter value represented by an integer;
by a fourteenth buffer field (buf) intended for storing characters representing the values of the parameters other than integers.

5. Device according to Claim 4 characterised in that the means for encoding the primitives of the proprietary application (CLIENT) to the special format comprise a table for the correspondence of the primitives to integers that represent the specific function and to a specific program for each function making it possible to fill suitably the useable fields of the format.

6. Device according to Claim 4 characterised in that the means for decoding the special format to primitives of the open sub-system (2) comprise a table for the correspondence of the integers to primitives of the open sub-system and to a specific processing program for the fields of the format useable by each primitive of the open sub-system.

7. Method used by the device according to one of the preceding claims, characterised in that the method for remote calling of distant stations (B) from a station (A) using a proprietary operating system (1) and having an open sub-system (2) consists of the following steps:
- execution of an operation P on a first flag (gmutex) by the proprietary system (1) and on a second flag (mutexur) by the open sub-system (2);
- encoding of the function to be executed in a format given by a service routine (31) of the proprietary system (1);
- writing of this encoded function to a segment of shared memory (32);
- execution of an operation V on a second flag (mutexur)
- wake-up by the execution of an operation V on the second flag (mutexur) of a communication point server (socket server) application (33), operating in the open sub-system (2);
- decoding by this application (33) of the message contained in the segment (32) and concomitantly execution of an operation P on a third flag (mutexgr) by the proprietary operating system (1);
- execution of the decoded function by the remote station (B);
- receiving of the result by the open sub-system (2) and re-encoding of this result in the specific format;
- rewriting of the encoded result to the segment of shared memory (32);
- execution of an operation V on the third flag (mutexgr) thus causing the wake-up of the service routine application (31) and execution of an operation P on the second flag (mutexur) thus causing the server socket (33) to be queued;
- interpretation by this service routine (31) of the result of the function;
- execution of an operation V on the first flag (gmutex) in order to allow other users of the proprietary operating system (1) to perform another task.

8. Method according to Claim 7 characterised in that before any use of the service routine (31) for the execution of a function that does not exist on the proprietary operating system (1), there is a step of launching the communication point server (33), which in a first step creates a segment of shared memory (32) and requests the allocation of the three flags (gmutex, mutexur and mutexgr), before executing the operation P on the second flag (mutexur) causing it to be queued.

## Patentansprüche

1. Vorrichtung, die die Verwendung eines Fernprozeduraufrufs (REMOTE PROCEDURE CALL) von offenen Systemen ermöglicht, die das Kommunikationspunkt-Verfahren (Socket-Verfahren) in einer proprietären Anwendung (proprietary) verwenden, die im proprietären Betriebssystem (1) nicht vorhandene Grundelemente verwendet und in einem Datenverarbeitungssystem abläuft, das über ein offenes Untersystem ("UNIX") (2) verfügt, wobei dieses offene Untersystem (2) über die Kommunikationspunkt-Funktion (Socket-Funktion) verfügt, dadurch gekennzeichnet, daß sie umfaßt:
Mittel für die Kommunikation zwischen der proprietären Anwendung (CLIENT) und einer Anwendung (33) unter dem offenen Untersystem über gemeinsam genutzte Speichersegmente (32);
Mittel zum Codieren der Grundelemente der proprietären Anwendung, die im proprietären Betriebssystem (1) nicht vorhanden sind, in einem speziellen Format und zum Speichern dieser Grundelemente in einem Segment des gemeinsam genutzten Speichers (32);
Mittel zum Starten einer Anwendung (33) unter dem offenen System ("UNIX") (2), um die vom Grundelement angeforderte Funktion zu decodieren und auszuführen und das Ergebnis der in dem speziellen Format ausgedrückten Funktion in dasselbe Speichersegment (32) zurückzuschicken;
Mittel zum Decodieren des Ergebnisses der in dem speziellen Format ausgedrückten Funktion, um der proprietären Anwendung (CLIENT) eine Beobachtbarkeit zu verleihen, als ob die Funktion vom proprietären Betriebssystem (1) lokal ausgeführt würde;
Mittel (gmutex, mutexur und mutexgr), die die Synchronisation der Zugriffe auf den gemeinsam genutzten Speicher (32) gewährleisten.

2. Vorrichtung nach Anspruch 1, dadurch gekennzeichnet, daß die Mittel, die die Synchronisation gewährleisten, ein erstes (gmutex), ein zweites (mutexur) und ein drittes (mutexgr) Semaphor sind.

3. Vorrichtung nach Anspruch 2, dadurch gekennzeichnet, daß die Anwendung (33) des offenen Untersystems (2) dann, wenn die proprietäre Anwendung (CLIENT) eine Operation P an dem ersten Semaphor (gmutex) ausführt, eine Operation P an dem zweiten Semaphor (mutexur) ausführt, woraufhin die proprietäre Anwendung eine Operation V an dem zweiten Semaphor (mutexur) und eine Operation P am dritten Semaphor (mutexgr) ausführt, woraufhin die Anwendung eine Operation V am dritten Semaphor (mutexgr) ausführt und schließlich die proprietäre Anwendung eine Operation V am ersten Semaphor (gmutex) ausführt.

4. Vorrichtung nach einem der vorhergehenden Ansprüche, dadurch gekennzeichnet, daß das spezielle Format, in dem die in dem proprietären Betriebssystem (1) nicht vorhandenen Grundelemente (RPC) codiert sind, eine Nachrichtenzone umfassen, die gebildet ist aus:
einem ersten Feld (func-n°), das durch eine die Funktion darstellende ganze Zahl gebildet ist;
einem zweiten Feld (JP), das die J-Nr. und die P-Nr. darstellt, für die die Anforderung erfolgt;
einem dritten Feld (func-value), das den Wert der Funktion nach der Ausführung der Funktion angibt;
einem vierten Feld (loc-errn°), das durch den Wert null angibt, daß die Funktion normal ausgeführt wird;
einem fünften (sys-ser-num) und einem sechsten (bksto) Feld für die Identifizierung der Maschine, die die Anforderung erzeugt;
einem reservierten siebten Feld;
einem achten (int1), einem neunten (int2), einem zehnten (int3), einem elften (int4), einem zwölften (int5) und einem dreizehnten (int6) Feld, die jeweils dazu bestimmt sind, einen durch eine ganze Zahl repräsentierten Parameterwert zu speichern;
einem vierzehnten Pufferfeld (buf), das dazu bestimmt ist, die Zeichen zu speichern, die die Werte der nicht ganzzahligen Parameter repräsentieren.

5. Vorrichtung nach Anspruch 4, dadurch gekennzeichnet, daß die Mittel zum Codieren der Grundelemente der proprietären Anwendung (CLIENT) in das spezielle Format eine Korrespondenztabelle der Grundelemente zu ganzzahligen Werten, die die spezifische Funktion darstellen, und zu einem spezifischen Programm für jede Funktion, das das geeignete Auffüllen der verwendeten Felder des Formats ermöglicht, enthalten.

6. Vorrichtung nach Anspruch 4, dadurch gekennzeichnet, daß die Mittel zum Decodieren des speziellen Formats in die Grundelemente des offenen Untersystems (2) eine Korrespondenztabelle von ganzzahligen Werten in die Grundelemente des offenen Untersystems und in ein spezifisches Verarbeitungsprogramm der für jedes Grundelement des offenen Untersystems nützlichen Formatfelder enthalten.

7. Verfahren, das von der Vorrichtung nach einem der vorangehenden Ansprüche ausgeführt wird, dadurch gekennzeichnet, daß das Verfahren für den Fernaufruf entfernter Stationen (B) von einer ein proprietäres Betriebssystem (1) verwendenden Station (A), die ein offenes Untersystem (2) besitzt, aus den folgenden Schritten besteht:
- Ausführen einer Operation P an einem ersten Semaphor (gmutex) durch das proprietäre System (1) und an einem zweiten Semaphor (mutexur) durch das offene Untersystem (2);
- Codieren der auszuführenden Funktion in einem gegebenen Format durch eine Dienstroutine (31) des proprietären Systems (1);
- Schreiben dieser codierten Funktion in ein Segment des gemeinsam genutzten Speichers (32);
- Ausführen einer Operation V an einem zweiten Semaphor (mutexur);
- Aufwecken einer Kommunikationspunkt-Serveranwendung (Socket-Server) (33), die im offenen Untersystem (2) abläuft, durch Ausführen einer Operation V am zweiten Semaphor (mutexur);
- Decodieren der in dem Segment (32) enthaltenen Nachricht durch diese Anwendung (33) und begleitend Ausführen einer Operation P an einem dritten Semaphor (mutexgr) durch das proprietäre Betriebssystem (1);
- Ausführen der decodierten Funktion durch die entfernte Station (B);
- Empfangen des Ergebnisses durch das offene Untersystem (2) und erneutes Codieren dieses Ergebnisses in dem spezifischen Format;
- erneutes Schreiben des codierten Ergebnisses in das Segment des gemeinsam genutzten Speichers (32);
- Ausführen einer Operation V an dem dritten Semaphor (mutexgr), was das Wecken der Dienstroutinen-Anwendung (31) hervorruft, und Ausführen einer Operation P am zweiten Semaphor (mutexur), was bewirkt, daß der Socket-Server (33) in den Wartezustand versetzt wird;
- Interpretieren des Ergebnisses der Funktion durch diese Dienstroutine (31);
- Ausführen einer Operation V am ersten Semaphor (gmutex), um anderen Anwendern des proprietären Betriebssystems (1) zu ermöglichen, eine andere Arbeit auszuführen.

8. Verfahren nach Anspruch 7, dadurch gekennzeichnet, daß vor jeglicher Verwendung der Dienstroutine (31) für die Ausführung einer im proprietären Betriebssystem (1) nicht vorhandenen Funktion ein Schritt des Startens des Kommunikationspunkt-Servers (33) vorhanden ist, der in einem ersten Schritt ein Segment des gemeinsam genutzten Speichers (32) erzeugt und die Zuweisung dreier Semaphore (gmutex, mutexur und mutexgr) anfordert, bevor die Operation P am zweiten Semaphor (mutexur) bewirkt, daß er in den Wartezustand versetzt wird.
